# EUROPÄISCHE PATENTANMELDUNG

(11) **EP 1 077 426 A2**
(43) Veröffentlichungstag der Anmeldung: **21.02.2001**
(21) Anmeldenummer: 00116546.3
(22) Anmeldetag: 01.08.2000
(51) Int. Cl.: G06K 1/12

(54) **Verfahren zum Aufbringen von visuell lesbaren Informationen auf kartenförmige Datenträger**

(30) Priorität: 19.08.1999 DE 19938829
(71) Anmelder: Orga Kartensysteme GmbH, 33104 Paderborn (DE)
(72) Erfinder: Fischer, Dirk, Dr., 33106 Paderborn (DE); Fannasch, Lothar, 33647 Bielefeld (DE); Hennemeyer-Schwenker, Michael, 33165 Lichtenau (DE); Wollschläger, Rolf, 33102 Paderborn (DE)

(57) **Zusammenfassung**

Die Erfindung betrifft ein Verfahren zum Aufbringen von visuell lesbaren Informationen auf kartenförmige Datenträger,
wobei
- der kartenförmige Datenträger mindestens eine Substratschicht und eine transparente, Deckschicht mit einem eine optische Linsenwirkung aufweisenden Oberflächenrelief aufweist,
- die Informationen mittels eines Laserstrahls durch die transparente Deckschicht hindurch auf die Substratschicht aufgebracht werden, wobei die Informationen in der Substratschicht durch eine von der Laserstrahlung verursachte Materialänderung sichtbar gemacht werden,
- in Richtung des einfallenden Laserstrahls vor der transparenten Deckschicht des kartenförmigen Datenträgers, die das Oberflächenrelief mit der optischen Linsenwirkung aufweist, ein entfernbares, optisch wirksames Mittel angeordnet wird, das die optische Linsenwirkung des Oberflächenreliefs auf der transparenten Deckschicht kompensiert,
- und der Laserstrahl durch das optisch wirksame Mittel auf die transparente Deckschicht geführt wird.

## Beschreibung

Die Erfindung bezieht sich auf ein Verfahren zum Aufbringen von visuell lesbaren Informationen auf kartenförmige Datenträger (z.B. Ausweiskarten). Gegenstand des erfindungsgemäßen Verfahrens ist insbesondere die Herstellung von sogenannten Laserkippbildern.

Die Beschriftung von kartenförmigen Datenträgem mit Laserstrahlung an sich ist bereits bekannt. Hierzu werden sogenannte Laserpersonalisierungsanlagen eingesetzt. Dabei ist die Laserpersonalisierung der letzte Schritt in der Herstellung der kartenförmigen Datenträger

Kippbilder sind beispielsweise von Postkarten, die ein Oberflächenrelief bestehend aus einem Linsenraster aufweisen bekannt, mit denen ein Stereobildeffekt oder Doppelbildeffekt erzielt wird. Dabei liegen auf der Postkarte zwei z.B. im Siebdruck aufgebrachte Bilder vor, die mittels des Linsenrasters unter verschiedenen Betrachtungswinkeln getrennt voneinander zu sehen sind. Zur Herstellung solcher Karten werden diese zuerst bedruckt und erst dann wird das Linsenraster aufgebracht.

Würde man bei der Herstellung von Laserkippbildern genauso vorgehen, dann wäre nach der Laserbeschriftung während der Personalisierung noch der Schritt des Aufbringens des Linsenrasters notwendig. Dies ist jedoch sehr unerwünscht, da die kartenförmigen Datenträger herkömmlicher Weise nach der Laserpersonalisierung unmittelbar Versandanlagen für das automatische Verschicken zugeführt werden.

Aufgabe der Erfindung ist es daher, ein Verfahren zur Herstellung von Laserkippbildern zu schaffen, das den oben beschriebenen Nachteil vermeidet.

Diese Aufgabe wird erfindungsgemäß durch die kennzeichnenden Merkmale des Patentanspruchs 1 gelöst.

Anhand der bei gefügten Zeichnungen soll die Erfindung näher erläutert werden.

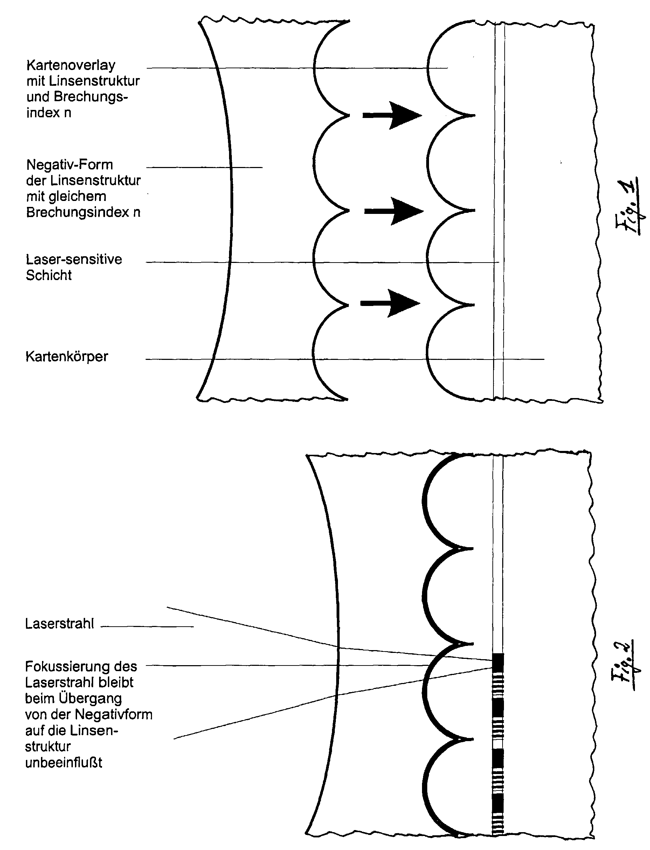

In Figur 1 ist ein kartenförmiger Datenträger gezeigt, dessen transparente Deckschicht (sogenannte Overlayfolie) ein Oberflächenrelief in Form eines Zylinderlinsenrasters aufweist. Diese Deckschicht ist auf einer lasersensitiven Substratschicht angeordnet. Auf das Oberflächenrelief der Deckschicht wird nun ein optisches Mittel aufgebracht, das die Linsenwirkung des Oberflächenreliefs der Deckschicht während der Laserbeschriftung kompensiert. In Figur 1 ist das optische Mittel noch räumlich von dem Oberflächenrelief entfernt dargestellt. Das dort gezeigte optische Mittel besteht aus Kunststoff oder Glas und weist die Negativform der Linsenstruktur auf der Deckschicht auf und ist somit komplementär zu dieser. Darüber hinaus weist das optische Mittel im wesentlichen den gleichen Brechungsindex auf wie die transparente Deckschicht.

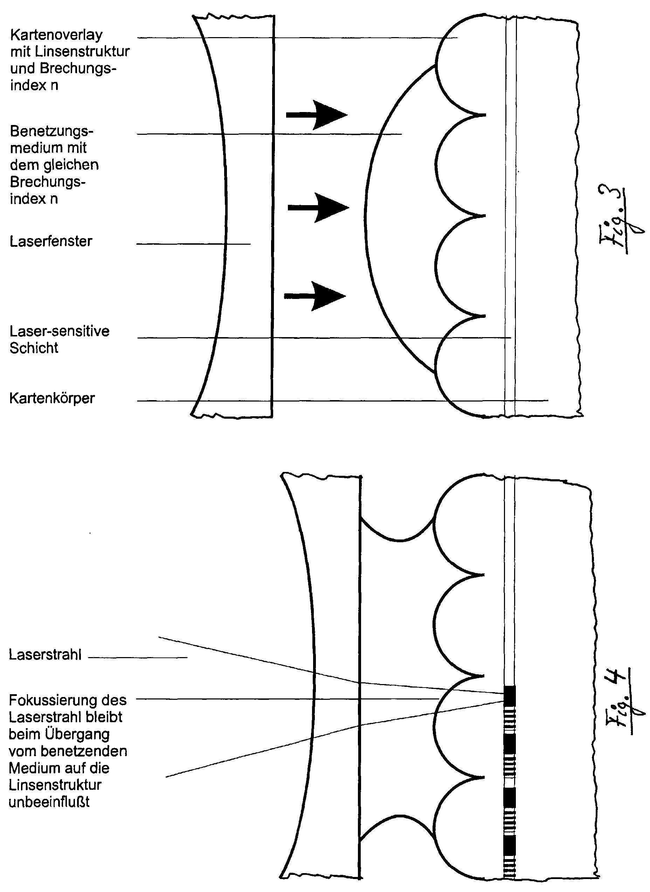

In Figur 2 ist dargestellt, wie das optische Mittel aus Figur 1 formschlüssig auf dem Linsenraster der Deckschicht liegt. Die Laserbeschriftung erfolgt nun durch das optische Mittel hindurch. Nach der Laserbeschriftung wird das optische Mitte wieder entfernt. Was bleibt ist die Linsenwirkung des Oberflächenreliefs der Deckschicht, die es gestattet, aus verschiedenen Blickwinkeln unterschiedliche Bilder (Informationen) zu betrachten.

In Figur 3 ist eine Flüssigkeit als optisches Mittel dargestellt, die auf das Oberflächenrelief der Deckschicht in Form eines Tropfens aufgebracht ist. Dabei hat die Flüssigkeit im wesentlichen den gleichen Brechungsindex wie die transparente Deckschicht. In Figur 4 ist dargestellt wie der Flüssigkeitstropfen über ein Laserfenster 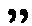 platt" gedrückt wird, und dabei die Höhenunterschiede des Oberflächenreliefs nivelliert.

Die Flüssigkeit kann nach der Beschriftung weggeblasen, abgesaugt oder von einem saugfähigen Material aufgenommen werden.

## Patentansprüche

1. Verfahren zum Aufbringen von visuell lesbaren Informationen auf kartenförmige Datenträger, wobei
- der kartenförmige Datenträger mindestens eine Substratschicht und eine transparente, Deckschicht mit einem eine optische Linsenwirkung aufweisenden Oberflächenrelief aufweist,
- die Informationen mittels eines Laserstrahls durch die transparente Deckschicht hindurch auf die Substratschicht aufgebracht werden, wobei die Informationen in der Substratschicht durch eine von der Laserstrahlung verursachte Materialänderung sichtbar gemacht werden,
dadurch gekennzeichnet, daß
- in Richtung des einfallenden Laserstrahls vor der transparenten Deckschicht des kartenförmigen Datenträgers, die das Oberflächenrelief mit der optischen Linsenwirkung aufweist, ein entfernbares, optisch wirksames Mittel angeordnet wird, das die optische Linsenwirkung des Oberflächenreliefs auf der transparenten Deckschicht kompensiert,
- und der Laserstrahl durch das optisch wirksame Mittel auf die transparente Deckschicht geführt wird.

2. Verfahren nach Anspruch 1,
dadurch gekennzeichnet, daß
- das optische Mittel eine zum Oberflächenrelief der transparenten Deckschicht komplementäre Struktur aufweist, und
- das optische Mittel formschlüssig auf das Oberflächenrelief der Deckschicht aufgebracht wird, wobei
- das optische Mittel und die transparente Deckschicht im wesentlichen gleiche Brechungsindizes aufweisen.

3. Verfahren nach Anspruch 1,
dadurch gekennzeichnet, daß
das optische Mittel eine Flüssigkeit ist, die auf das Oberflächenrelief der transparenten Deckschicht aufgebracht wird, wobei die Flüssigkeit die Höhenunterschiede der Oberflächenreliefs nivelliert und im wesentlichen den gleichen Brechungsindex wie die transparente Deckschicht aufweist.
